# EUROPEAN PATENT APPLICATION

(11) **EP 1 710 690 A1**
(43) Date of publication of application: **11.10.2006**
(21) Application number: 05252209.1
(22) Date of filing: 07.04.2005
(51) Int. Cl.: G06F 7/52

(54) **Multiplication circuitry**

(71) Applicant: STMicroelectronics (Research & Development) Limited, Marlow, Buckinghamshire SL7 1YL (GB)
(72) Inventor: Kurd, Tariq, Horfield, Bristol BS7 9QR (GB)
(74) Representative: Driver, Virginia Rozanne

(57) **Abstract**

A multiplier circuit for multiplying a first and a second operand, the circuit comprising: sectioning circuitry arranged to section the first operand into a first number of parts; a multiplier arranged to receive the second operand and a second number of the first number of parts, wherein the multiplier is further arranged to generate only a second number of product terms, each product term being one of the second number of parts multiplied by the second operand.

## Description

### Field of the Invention

The present invention relates to multiplication circuitry. In particular but not exclusively the present invention relates to multiplication circuitry for multiplying two double precision floating point operands.

### Background of the Invention

Binary floating point numbers such as those defined by the Institute of Electrical and Electronic Engineers (IEEE) standard 754 are capable of representing floating point numbers within typical circuitry. A generalised example of an IEEE 754 standard floating point number is + (X.Y)*(2ⁿ).

The floating point number has three basic components, the sign, the exponent, and the mantissa.

In the generalised form shown above the '+' part is represented by the sign component, the 'X.Y' part by the mantissa, and the '2ⁿ' by the exponent. The mantissa comprises two parts, the fraction representing 'Y' part and an implicit leading digit representing the 'X' part. The implicit leading digit is a '1' when the floating point is a normalised number, and a '0' when the floating point is a denormalised number. A number is normalised when the exponent part of the number is greater than its smallest number.

The exponent is required to represent both positive and negative numbers. In order to do this a bias value is added to the actual exponent value in order to get the stored exponent. Furthermore the exponent values of -127 (all 0's) and +128 (all 1's) are reserved for special numbers.

As is known in the art a double precision or 64 bit floating point number has 1 bit allocated to the sign part, 11 bits allocated to the exponent, and 52 bits allocated to the fraction.

Therefore the smallest normalised number for a double precision number is 2⁻¹⁰²².

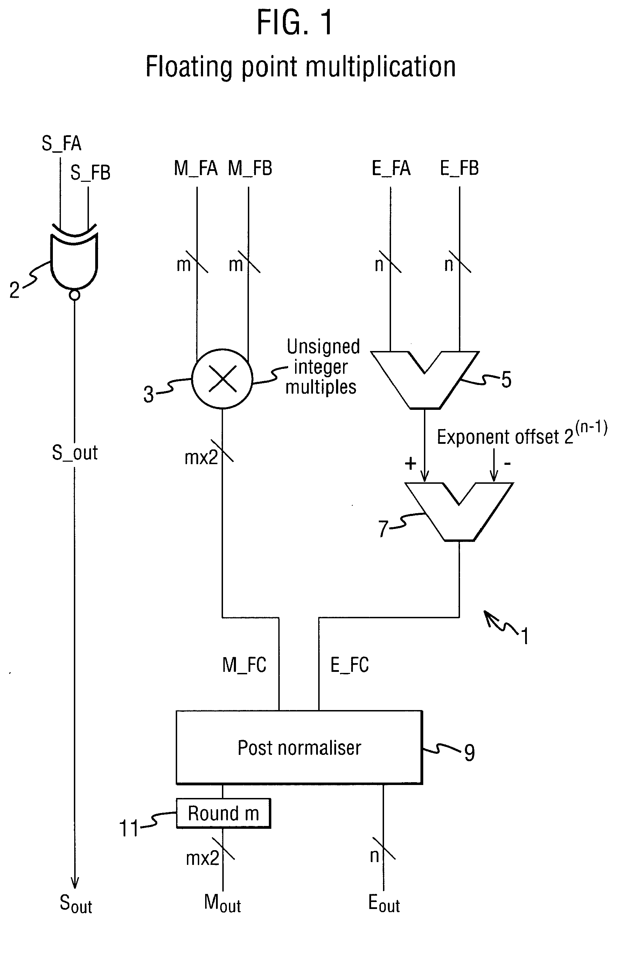

Floating point multiplication circuitry is also known in the art. Figure 1 shows a schematic view of a known single precision floating point multiplier circuit 1 capable of multiplying floating point numbers FA and FB. The numbers FA and FB are also known as operands. Figure 1 shows that in order to carry out a floating point multiplication the multiplier circuitry 1 is divided into five circuit elements, explained below.

A comparator 2 compares sign bits S_FA, S_FB to determine if the output value is a positive or negative number. This is carried out in figure 1 by the XNOR gate.

An integer multiplier 3 multiplies the operand mantissas M_FA and M_FB to produce a mantissa product M_FC.

An adder stage 5, 7 adds the operand exponents E_FA and E_FB, with an additional offsetting to compensate for the original offset of E_FA and E_FB, to produce an exponent sum E_FC.

A post multiplication normaliser 9 normalises the mantissa product to bring the mantissa back into the form 1.Y, i.e. with an implicit leading value of 1. The normalisation may require the exponent sum E_FC to be modified.

Finally a rounding circuit 11 rounds the normalised mantissa product, to reduce the number of bits used to represent the number and therefore enable the product to be represented by the same number format as the operands.

A typical integer multiplier comprises an operand encoder, a partial product generator, a product term compressor or combiner, and a final term addition stage Typically these have required a 64x64 bit multiplier block which multiplies two 64 bit numbers simultaneously. However if floating point multiplication is only required of the multiplier then the multiplier block has been typically a 53x53 bit device. Furthermore the final term addition stage capable of handling the output from a 53x53 bit multiplier is required to be at least 106 bits wide. This outputs a 106 bit word representing the pre-normalised product.

This 106 bit product is then input to a 106 bit post multiplication normalisation circuit for normalisation. In order to perform the normalisation step the same product term is input to a 106 place leading zero counting circuit (CLZ) (not shown in figure 1) to determine the extent of the normalisation required. The leading zero counting circuit examines the number bit by bit in order to determine the point at which there is a leading '1' value and outputs this leading value to the normalisation circuit.

As can be appreciated by the skilled person in the art the requirement of having 106 bit wide processing elements makes the circuit very expensive in terms of silicon area used. Furthermore the 106 place leading zero count (CLZ) and 106 place normalisation circuits are typically very slow as the circuit has to be designed to allow for the worst case situation where the leading zero count circuit and normalisation circuit examine all 106 bits to arrive at the leading '1' value.

### Summary of the Invention

It is therefore an aim of the embodiments of the present invention to address or partially mitigate the problem discussed previously of reducing the silicon area used for a multiplier circuit and also speeding up the general multiplication of two floating point numbers.

There is provided according to a first aspect of the present invention a multiplier circuit for multiplying a first and a second operand, the circuit comprising: sectioning circuitry arranged to section the first operand into a first number of parts; a multiplier arranged to receive the second operand and a second number of the first number of parts, wherein the multiplier is further arranged to generate only a second number of product terms, each product term being one of the second number of parts multiplied by the second operand.

Thus in embodiments of the present invention a multiplier circuit multiplying two 64 bit floating point numbers does not have to have a full 106 bit wide output as the product is calculated using sections of the operand which produce smaller width products, only 64 bits wide for example, which are simpler to produce and require less space on the silicon chip.

The circuit may further comprise control circuitry arranged to determine the second number dependent on the properties of the first operand and/or the second operand.

The control circuitry may be further arranged to determine the second number by the position of the first non zero value in the first operand and/or second operand.

The control circuitry may further be arranged to determine the second number depending on whether the first and/or second operand is part of a denormalised number.

The embodiments of the present invention therefore overcome the problem where one of the operands is a denormalised number, as this could produce a leading '1' value of the product being found as low as bit 52. In such a system as claimed above all but the top 5 bits would be discarded effectively destroying the result. Instead the control circuitry notices that sections of the denormalised operand are zeros and therefore the resulting product terms would also be zeros. In the case that only the least significant section of the operand had '1' values, i.e. that the other 6 sections were all zeros, then the embodiments of the invention could stop the operation in only one step by selecting the second number as being 1. This action would keep the first result in totality.

In embodiments of the invention a rule may be followed whereby if all of the remaining sections of the operand are zeros then stop the multiplication process.

According to a second aspect of the present invention there is provided a method of operating a multiplier circuit comprising the steps of: receiving a first and second operand; sectioning the first operand into a first number of parts; multiplying a second number of the first number of parts of the first operand by the second operand to form a second number of product terms; combining the second number of the product terms to form the product of the first and second operands.

The method may further comprise the steps of: detecting if the first or second operand is a denormalised number; determining a first leading '1' value in the first or second operand; calculating the second number dependent on the steps of detecting and determining.

The step of determining a first leading '1' value may be carried out on either the first or second operand in dependence on the detecting step.

### Brief Description of Drawings

For a better understanding of the present invention and how the same may be carried into effect, reference will now be made by example only to the accompanying drawings in which:
Figure 1 shows a schematic view of a floating point multiplier as known in the art;
Figure 2 shows a simplified schematic view of part of a floating point multiplier showing an embodiment of the present invention;
Figure 3 shows the process and products of a 53x8 bit multiplier as shown in Figure 1;
Figure 4 shows a schematic view of the accumulation of the multiplier products from the 53x8 bit multiplier as shown in Figures 2 and 3; and
Figure 5 shows a detailed schematic view of a floating point multiplier according to a second embodiment of the present invention further incorporating the floating point multiplier shown in figures 2 to 4.

### Detailed Description of Embodiments of the Present Invention

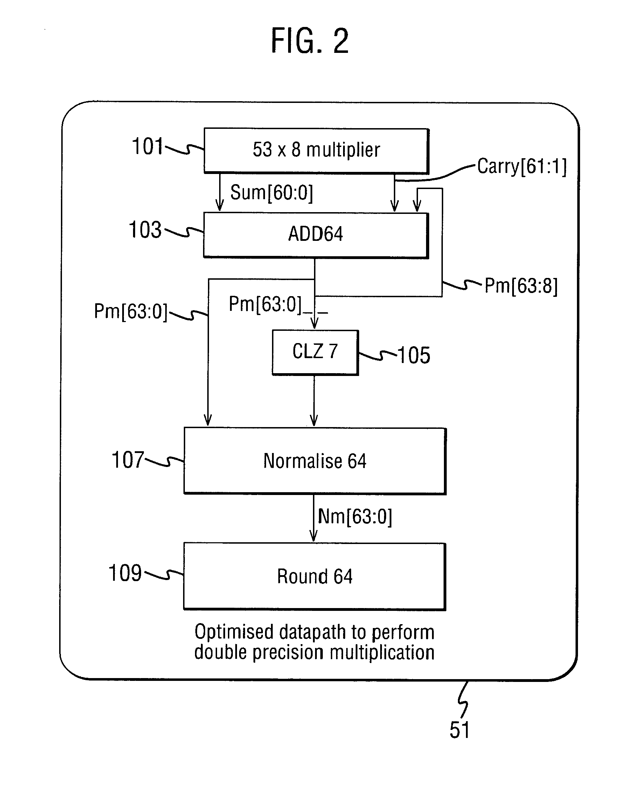

With reference to Figure 2 a multiplier exemplifying a first embodiment of the present invention is shown. The embodiment has an optimised data path performing double precision multiplication. A multiplier core 51 comprises a 53x8 bit multiplier block 101, a 64 bit adder 103, a 7 place leading zero counting circuit 105, a 64 bit normalisation circuit 107 and a 64 bit rounding circuit 109.

The 53x8 multiplier block 101 receives a 53 bit input and a 8 bit input (both described in further detail later but not shown on figure 2) and outputs a 61 bit sum term, sum [60:0], and a 61 bit carry term, carry [61:1]. As is appreciated by the skilled person in the art we have described multiple bit terms using the reference term [M:N], where the numbers in the square brackets define the weighting of the most significant bit M and the least significant bit N, and the total number of bits by the inclusive difference between the two M-N+1. Thus the term sum [60:0] has a most significant bit equal to the value of 2⁶⁰, a least significant bit equal to the value of 2⁰, and is 61 bits wide.

The carry and the sum terms are input to a 64 bit adder block 103. The 64 bit adder block 103 outputs a pre-normalised mantissa product, which is 64 bits long, PM [63:0].

The most significant 56 bits of the pre-normalised mantissa product, PM [63:8] are fed back to the input of the 64 bit adder block 103 to form a third separate input term.

The most significant 8 bits of the pre-normalised mantissa product, PM [7:0] are passed to the input of the 7 place leading zero counting circuit (CLZ) 105. The CLZ 105 calculates the position of the first '1' value and outputs the value of the leading zero count to the normalisation circuit 107.

Furthermore the full pre-normalised mantissa product value is passed to the normalisation circuit 107. From the 64 bit product and the output from the CLZ 105 the normalisation circuit normalises the product and outputs the 64 bit normalised value NM [63:0] to the rounding circuit 109. The rounding circuit 109 then carries out a rounding process on the normalised product NM [63:0] to produce a 64 bit normalised and rounded mantissa value.

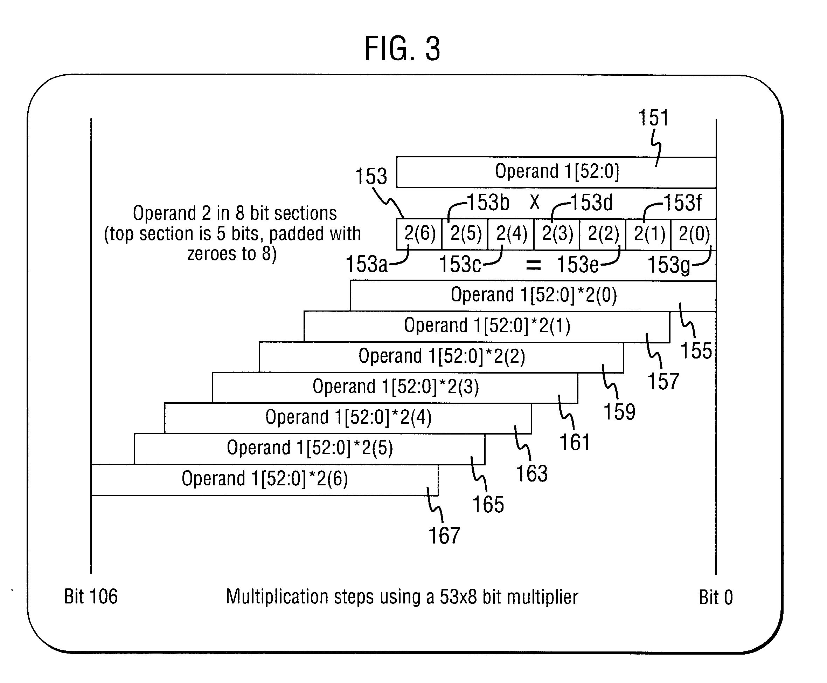

Figure 3 demonstrates a method for performing a 53x53 bit multiplication using a 53x8 bit multiplier such as shown in Figure 2. The two input operands, operand 1 [52:0] 151 and operand 2 [52:0], 153 are the two floating point mantissa numbers to be multiplied. The first step in multiplying these two numbers together is to split operand 2 into seven parts or sections 153a to 153g.

These sections are referred as operands 2(0) to 2(6). Operand 2(0) 153g represents the least significant 8 bits of operand 2, i.e. the bits representing the binary weightings of 2⁷ to 2⁰. The operand 2(1) 153f represents the next 8 significant bits, i.e. 2¹⁵ to 2⁸. The operand 2(2) 153e represents the next 8 significant bits, i.e. 2²³ to 2¹⁶. The operand 2 (3) 153d represents the following significant 8 bits, i.e. 2³¹ to 2²⁴. The operand 2 (4) 153c represents the next 8 significant bits, i.e. 2³⁹ to 2³². The operand 2(5) 153b represents the next 8 significant bits, i.e. 2⁴⁷ to 2⁴⁰. Operand 2(6) 153a represents the five most significant bits, i.e. 2⁵² to 2⁴⁸ padded with zeros to form an 8 bit number.

The 53x8 bit multiplier performs a multiplication of the two 53 bit operands by firstly multiplying operand 1 by operand 2(0) to produce a first section product 155. The first operand is then multiplied in turn by the operands 2(1), 2(2), 2(3), 2(4), 2(5), and 2(6). Each of these multiplications produces a pair of 61 bit output terms, sum [60:0] and carry [61:1]. which when added together produce a second 157, third 159, fourth 161, fifth 163, sixth 165 and seventh 167 section product. Figure 3 shows the relative weighting of each of these section products. Thus the product of the multiplication between operand 1 and 2(0) lies between bits 0 and 61, whereas the product of operand 1 and 2(6) lies between bits 106 and 48.

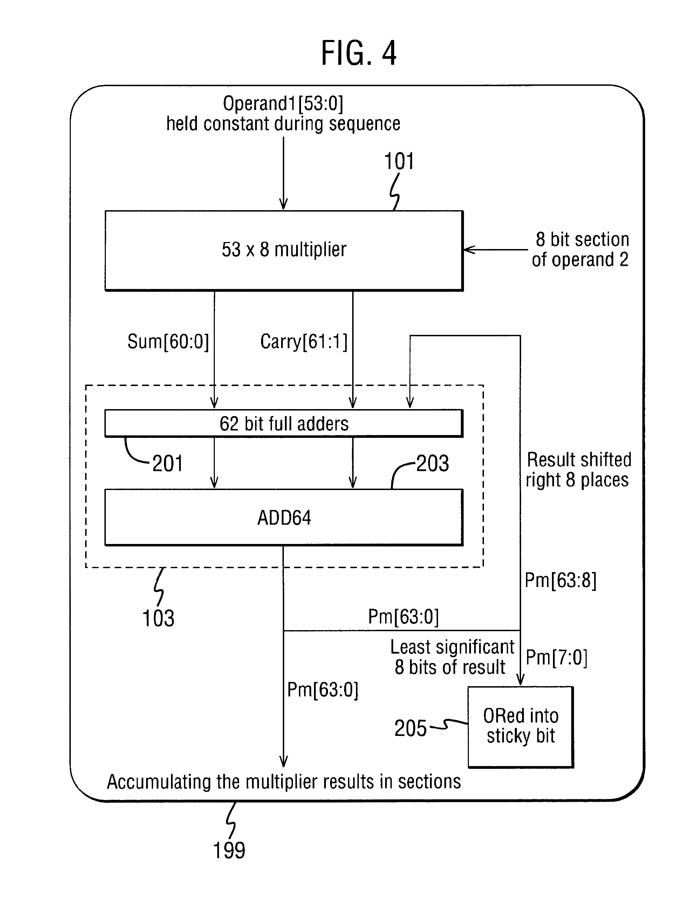

With reference to Figure 4 a multiplier circuit 199 is shown schematically demonstrating the accumulation of these section products to form a complete product is described in further detail. Where possible the same reference numerals have been reused from Figures 2 and 3.

The multiplier circuitry 199 comprises a 53x8 bit multiplier 101, a 64 bit adder block 103 and sticky bit circuitry 205.

As described previously the 53x8 bit multiplier 101 has a first inputs for operand 1 [53:0], and a second input for an 8 bit section of operand 2. The operand 1 is held constant during the whole multiplication sequence in order to maintain a correct result, whereas the second input is able to be changed during the multiplication process.

The arrangement of the 53x8 bit multiplier 101 and 64 bit adder block 103 has been described with reference to figure 2 and will not be described in further detail.

The 64 bit adder block 103 comprises a 62 bit full adder circuit 201, and a 64 bit adder 203. The 62 bit full adder circuit 201 is arranged to receive the three input terms to the 64 bit adder block 103, the sum [60:0], carry [61:1] and a section of the prenormalised mantissa product PM [63:8] and output two output terms. The 64 bit adder 203 receives the terms output from the 62 bit full adder circuit 201 and outputs a single 64 bit result PM [63:0] which forms the output from the 64 bit adder block 103.

The operation of the 62 bit full adder circuit 201 can also be seen as a compression or combination of the three terms to produce two terms. However the section of the prenormalised mantissa fed back to the input is connected to the inputs of the 62 bit full adder circuit in such a manner that the least significant bit of the 56 bits is added to the least significant bit of the sum and the most significant bit of the 56 bits added to the 2⁵⁵ bit of the sum and the 2⁵⁵ bit of the carry. In other words the output of the 64 bit adder block 103 is effectively shifted right by 8 bits PM [63:8] => PM' [55:0].

As described previously the 64 bit result is separated into two parts. The first part comprising the least significant 8 bits of the result, PM [7:0] is passed to the CLZ circuitry (not shown in fig 4) and is also passed to a sticky bit circuit 205.

The sticky bit circuit 205 is used to determine if any accuracy has been lost from the process. In order to determine whether accuracy has been lost the PM [7:0] part is bitwise ORed together to produce a single bit result called the sticky bit. If the sticky bit is equal to 1 then a value has been discarded and hence the full accuracy of the result has been lost. This output sticky bit is furthermore fed back a further bit input to determine if any section product has 'lost accuracy'.

The accumulation operation of the multiplier will be now described. As described with respect to figure 3 the multiplier initially receives the first operand and the first 8 bit section of the second operand 2(0) 153g. The 53x8 bit multiplier 101 performs a multiplication of these products and outputs the sum and carry values to the 64 bit adder block 103. As the initialised output of the 64 bit adder block 103 is equal to zero the output of the 62 bit full adder circuit 201 is the same as its input. The 64 bit adder 203 adds these values to produce the first section product. The first section product is separated into two parts, the least significant part being passed to the sticky bit circuit 205 and the most significant part is fed back to the input of the 64 bit adder block 103.

The next 8 bit section of the second operand 2(1) is then applied to the 53x8 bit multiplier. This section 2(1) 153f multiplied by operand 1 produces a second sum and carry value which is passed to the 64 bit adder block 103. The 62 bit full adder 201 combines the sum, carry and most significant 56 bits of the last result to produce two terms which are input into the 64 bit adder 203 to produce a second section product. The second result is then also separated into two parts, the least significant 8 bits passed to the sticky bit circuit 205 and the most significant 56 bits fed back to the input of the 64 bit adder block 103 to await the next sum and carry values. This process is repeated until the 53x8 multiplier multiplies operand 1 by the section 2(6) 153a to produce the seventh output from the 53x8 bit multiplier. The sum and carry outputs of the final multiplication are added to the most significant 56 bits of the previous product by the 62 bit full adder circuit 201 and the 64 bit adder 203 to produce the final result. The seventh result is similarly separated into two parts, the 8 least significant bits and the 56 most significant bits. The 8 least significant bits of the seventh result are passed to the sticky bit circuit 205.

The seventh result can then be passed to the normalisation circuit and rounding circuit along with the exponent calculation (all of which are not shown) to produce a final floating point output number.

It is therefore possible to multiply two 53 bit numbers (representing two floating point mantissa parts) together using only a single 53x8 bit multiplier and 64 bit adders saving valuable silicon area space. Furthermore as the multiplication block is only a 53x8 bit multiplier rather than a 64x64 bit or 53x53 bit multiplier the performance speed of a single section product can be increased as the smaller number of terms multiplied and processed per section requires fewer clock cycles. Also as the result has already been effectively been rounded to a 64 bit number then any normalisation and rounding circuitry needs only to be able to handle a 64 bit rather than 106 bit number.

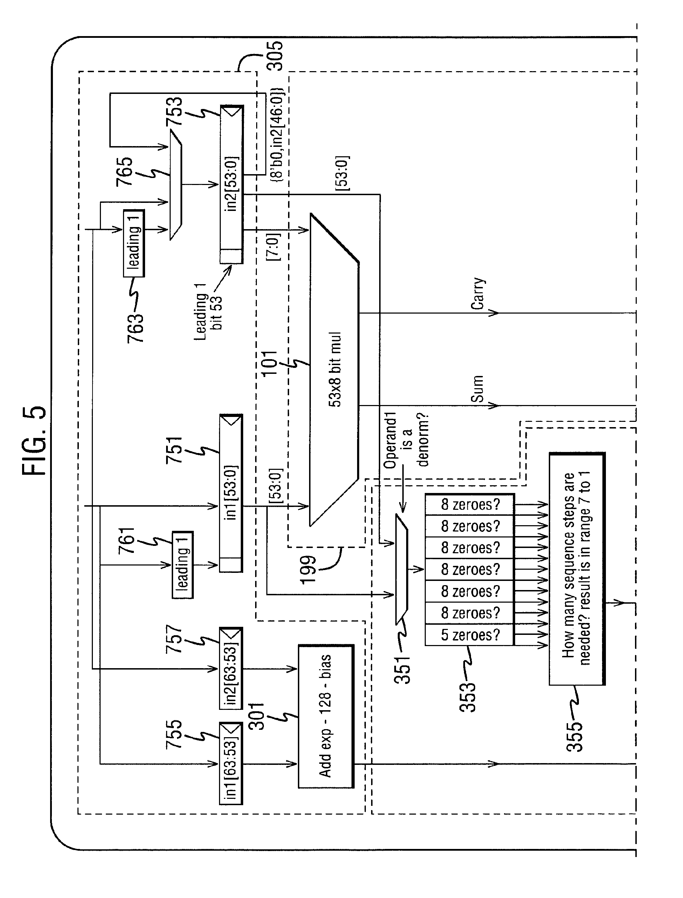

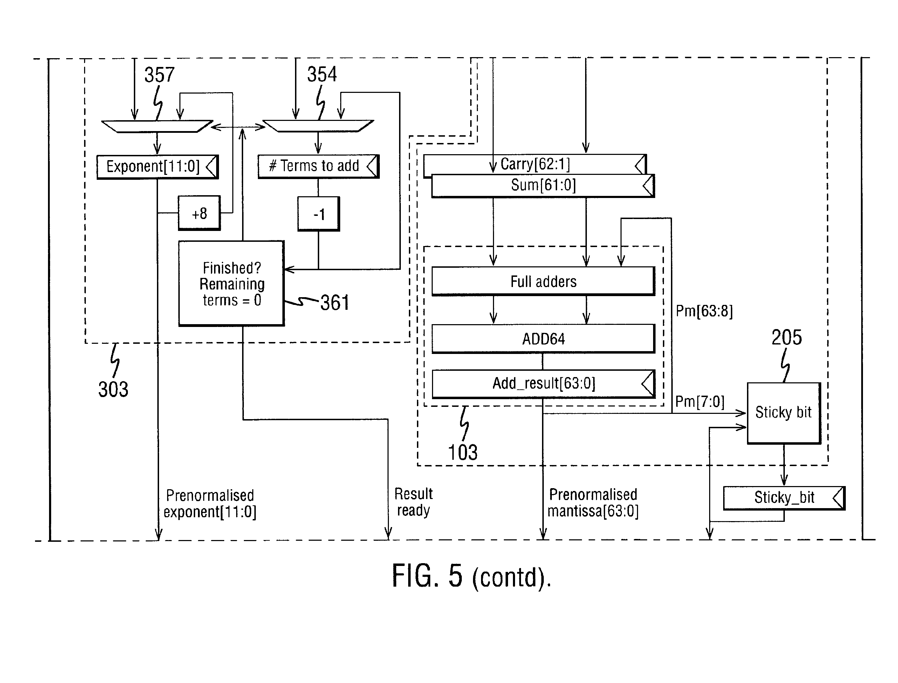

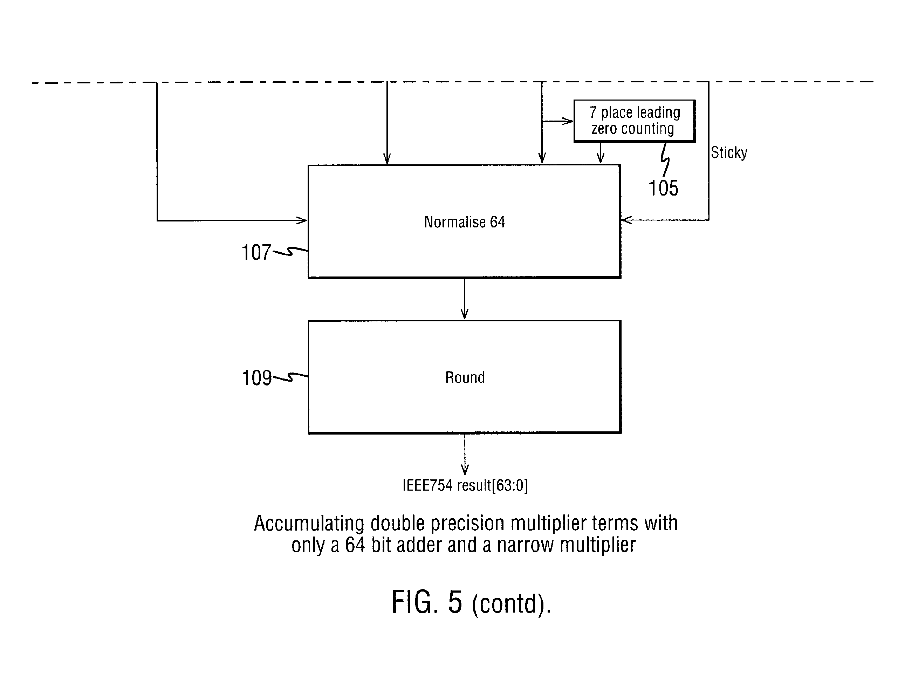

With regards to Figure 5 a second embodiment of the present invention is shown. The embodiment as shown in Figure 5 has a further advantage over the first embodiment in that the second embodiment has improved performance with regards to denormalised operands. A denormalised operand is one where the exponent value of the floating point number has reached its limit. In such cases the fraction element does not necessarily have an initial implied value of '1.Y'. Multiplication involving a denormalised number also produces a product which itself can be denormalised.

If one of the operands is a denormalised number, the leading significant '1' value of the product could be found as low as bit 52, and therefore the mantissa representing the result would only lie in bit locations 2⁵² to 2⁰ of the full 106 bit number. In such circumstances using the embodiment as described above all but the top 5 bits would have been ORed into the sticky bit circuit 205 effectively destroying the accuracy of the result.

The embodiment shown in Figure 5 comprises a multiplier circuit 199, as shown in figure 4, comprising a 53x8 bit multiplier block 101, a 64 bit adder block 103 and sticky bit circuit 205 as shown in Figure 4. The embodiment further comprises the seven place leading zero counter circuit (CLZ) 105, the normalisation circuit 107, and the rounding circuit 109, as shown in figure 2. Furthermore the embodiment further comprises input circuitry 305, and result control circuitry 303.

The input circuitry 305 is arranged to receive the pair of floating point numbers to be multiplied, and outputs the exponent addition result to the result control circuitry 303 and the mantissa multiplication operands to the multiplier circuit 199 and the result control circuitry.

The input circuitry comprises first and second input registers 751 and 755 arranged to receive the first floating point fraction part and the first floating point exponent part respectively.

The first register 751 receiving the first floating point number fraction also receives a further bit input from a denormalised number detector 761. The detector receives the exponent part of the first number and is arranged to output a '0' bit if the exponent part is equal to all zeros and a '1' bit for all other exponents.

Similarly the input circuitry also comprises third and fourth input registers 753 and 757. The fourth input register 757 receives the second floating point exponent part respectively.

The third input register receives the output of multiplexer 765 which selects either the fraction part of the second number and the output of a second denormalised number detector 763 or the most significant 46 bits of the third input register.

The second denormalised number detector 763 receives the exponent part of the second number and is arranged to output a '0' bit if the exponent part is equal to all zeros and a '1' bit for all other exponents.

The second and fourth registers 755, 757 containing the exponent parts of the first and second floating point numbers are passed to an exponent addition and re-biasing circuit 301 as known in the art. This value is output to the result control circuit.

The first register 755 outputs the first number mantissa into the first operand input of the multiplier circuit 199 and also to the result control circuit 303.

The third register 753 outputs the least significant 8 bits of the mantissa into the second operand section input of the multiplier circuit 199, the most significant 47 bits to the input circuit multiplexer 165, and the whole mantissa to the result control circuit 303.

The feedback arrangement of the multiplexer and the third register enables the input register to output the mantissa sections 2(0) to 2(6) as required. At each operation of the multiplexer the most significant 47 bits of the register are selected by the multiplexer to be the next input with the current 8 bit output being effectively deleted by an 8 bit shift right action on the mantissa.

The multiplier circuit 199 has previously been described above with reference to figure 4 in terms of the structure and operation of the multiplier and will not be described in further detail.

The result control circuitry 303 comprises a comparison multiplexer 351, comparison circuitry 353, comparison selection circuitry 355, an exponent multiplexer 357, a term multiplexer 359, and a term comparator circuit 361.

The comparison multiplexer 351 receives the first and second number mantissas, and determines which input to select dependent on if the first number is a denormalised value (this could be provided by the denormalised number detector 761 connection not shown in figure 5). If the first number is a denormalised number then the first number mantissa is passed to the comparator circuitry 353, else the second mantissa is passed.

The comparison circuitry 353 separates the received mantissa into seven sections. The comparison circuitry 353 compares each of the mantissa sections to determine if they contain all zero values. The results of these comparisons are passed to the comparison selector circuitry 355.

The comparison selector 355 determines which section contains the first non zero value, the result of which can therefore be a number from 1 to 7. If the first '1' is detected within the first section of 5 most significant bits the result is 7, however if the first '1' is detected in the 8 least significant bits the result is 1.

The comparison selector circuitry 355 result is received by the term multiplexer 359. The term multiplexer 359 second input is the number of the output of the term multiplexer 359 minus the value 1. The term multiplexer selects either the comparison selector circuitry value or the modified feedback value dependent on the result ready signal of the output of the term comparator circuit 361. If the result ready signal is not asserted the term multiplexer selects the feedback term, else the comparison selector result is selected.

The term comparator circuit 361 receives the output of the term multiplexer 359 minus the value 1. If the received value is equal to 0, the term comparator circuit 361 outputs an asserted result ready signal to the term multiplexer 359, exponent multiplexer 357 and the normalisation circuitry 107.

The exponent multiplexer 357 receives the output of the exponent adding and biasing circuitry 301, and the output of the exponent multiplexer 357 plus the value of 8. The exponent multiplexer is arranged to output the exponent adding and biasing circuitry 301 result if the received result ready signal is asserted, else the modified feedback result is selected.

The normalisation circuit 107 receives the result ready output from the term comparator circuit 361, an output from the exponent multiplexer 357, a sticky bit value and the pre-normalised product PM [63:0] from the multiplication circuit 199 and a zero counting output from the 7 place leading zero counting circuitry 105.

The normalisation circuit 107 on receiving an asserted result ready signal performs a normalisation action (as is known in the art) on the pre-normalised exponent value output from the second multiplexer 357, and the pre-normalised mantissa value from the multiplier block 199 dependent on the 7 place leading zero counting circuit 105.

The output of the normalisation circuit 107 is input to the rounding circuit 109. The rounding circuit produces a final rounded 64 bit floating point number comprising both the post normalised exponent and post normalised mantissa.

The advantages of this embodiment of the present invention can be seen by examining the performance of the embodiment when either the first or second operands are denormalised. It is assumed that the multiplexers 765, 351, 357, 359 and the multiplier circuit are maintained synchronised by some clock or multiple of clock signal.

For example if the first number is a normalised number but the second number is a denormalised number with a first non zero component of the fraction at 2⁵⁰ then the comparison multiplexer 351 selects the second number mantissa to be passed to the comparison circuitry 353. The comparison selector 355 outputs a value of 7 as the comparison circuitry detects that the first section 2⁵³ to 2⁴⁹ contains a non zero value.

This value is passed to the term multiplexer which then requires 7 iterations before the term comparator asserts a result ready signal. These 7 iterations enable the exponent multiplexer feedback loop to increase the exponent value by 48, the input circuitry multiplexer to output all 7 sections of the second operand to the multiplier circuit 199, and the generation and accumulation of 7 section products by the multiplier circuit 199. The multiplier circuit 199 also outputs a sticky bit output, in this example the output being the result of 7 sticky bit iterations.

For a second example if the first number is a normalised number but the second number is a denormalised number with a first non zero component of the fraction at 2⁵ then the comparison multiplexer 351 selects the second number mantissa to be passed to the comparison circuitry 353. The comparison selector 355 outputs a value of 1 as the comparison circuitry detects that the seventh section, 2⁷ to 2⁰, contains the first non zero value.

This value is passed to the term multiplexer which then requires only this iteration before the term comparator asserts a result ready signal. This single iteration does not increase the exponent value, and the input circuitry multiplexer only outputs one section of the second operand to the multiplier circuit 199 with the generation of only one section product from the multiplier circuit 199. The multiplier circuit 199 furthermore outputs the sticky bit output. In this example the output of a single sticky bit iteration is never set as there is no loss in accuracy following the first iteration, as it is only after the first iteration a loss in accuracy can occur following the logical shift right of the section product value as it is fed back to the input of the 64 bit adder block in the multiplier circuit 199.

Thus for the first example of a slightly denormalised (or normalised) number the operation of the whole multiplier is equivalent to the first embodiment of the invention, where the final result is formed by the accumulation of seven separate section products. However for a more than slightly denormalised number, the final result output maintains as much precision as possible by not automatically rounding the significant section products to zero. Furthermore as denormalised numbers require fewer section products to be calculated then the time required to calculate a product involving a denormalised number is reduced.

This applies in embodiments of the invention to both the first or second operand being found to be a denormalised number. Therefore only one operand has a zero counting operation carried out on it.

In further embodiments of the present invention, where both multiplication operands are denormalised numbers, the result control circuitry further comprises a circuit (not shown in the figures) for detecting that both numbers are denormalised numbers. In this situation the multiplier, on detecting that both numbers are denormalised numbers, is arranged to produce a result which is equal to zero. Furthermore on detecting that both numbers are denormalised numbers the multiplier produces a sticky bit result which is set as the accuracy of the result has been lost. In this special case the use of the iterative multiplication algorithm and circuitry carrying out the algorithm is not required.

## Claims

1. A multiplier circuit for multiplying a first and a second operand, the circuit comprising:
sectioning circuitry arranged to section the first operand into a first number of parts;
a multiplier (101) arranged to receive the second operand and a second number of the first number of parts, wherein the multiplier (101) is further arranged to generate only a second number of product terms, each product term being one of the second number of parts multiplied by the second operand.

2. The multiplier circuit as claimed in claim 1, further comprising control circuitry (303) arranged to determine the second number dependent on the properties of the first operand and/or the second operand.

3. The multiplier circuit as claimed in claim 2, wherein the control circuitry (303) is further arranged to determine the second number by the position of the first non zero value in the first operand and/or second operand.

4. The multiplier circuit as claimed in claim 2 or 3 wherein the control circuitry (303) is further arranged to determine the second number depending on whether the first and/or second operand is part of a denormalised number.

5. The multiplier circuit as claimed in any of claims 1 to 4 wherein the sectioning circuitry (753, 765) comprises an iterative sectioning circuit, the iterative sectioning circuit being initially arranged to section the first operand into one of the first number of parts of the first operand and a remainder part.

6. The multiplier circuit as claimed in claim 5, wherein the remainder part is used as the next input for the iterative sectioning circuit.

7. The multiplier circuit as claimed in any previous claim further comprising an accumulator (103) for receiving each product term and adding each received product term to the sum of each previously received product term.

8. The multiplier circuit as claimed in any previous claim wherein the first and second operand are floating point mantissas.

9. The multiplier circuit as claimed in any previous claim further comprising a normalisation circuit arranged to receive the product terms and generate a normalised value dependent on the received terms.

10. The multiplier circuit as claimed in claim 9 further comprising a rounding circuit arranged to receive the normalised value and generate a rounded normalised value.

11. A method of operating a multiplier circuit comprising the steps of:
receiving a first and second operand;
sectioning the first operand into a first number of parts;
multiplying a second number of the first number of parts of the first operand by the second operand to form a second number of product terms;
combining the second number of the product terms to form the product of the first and second operands.

12. A method as claimed in claim 11, further comprising the steps of:
detecting if the first or second operand is a denormalised number;
determining a first leading '1' value in the first or second operand;
calculating the second number dependent on the steps of detecting and determining.

13. A method as claimed in claim 11, wherein the step of determining a first leading '1' value is carried out on either the first or second operand in dependence on the detecting step.
